(19)

Europäisches
Patentamt
European
Patent Office
Office européen
des brevets

(11) **EP 1 562 322 B1**

(12) **EUROPEAN PATENT SPECIFICATION**

(45) Date of publication and mention
of the grant of the patent:
**31.03.2010 Bulletin 2010/13**

(51) Int Cl.:
*H04L 12/18* <sup>(2006.01)</sup>　　　*H04L 29/06* <sup>(2006.01)</sup>

(21) Application number: **04002705.4**

(22) Date of filing: **06.02.2004**

(54) **System and method of providing content in a multicast system**

Verfahren und Vorrichtung zur Bereitstellung von Inhalt in einem Multicast-System

Système et procédé de fourniture de contenu dans un système multidestination

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(43) Date of publication of application:
**10.08.2005 Bulletin 2005/32**

(73) Proprietor: **Research In Motion Limited
Waterloo, Ontario N2L 3W8 (CA)**

(72) Inventor: **Verbestel, Willy Maurice
Escondido, CA 92025 (US)**

(74) Representative: **MERH-IP
Matias Erny Reichl Hoffmann
Paul-Heyse-Strasse 29
80336 München (DE)**

(56) References cited:
**WO-A-03/036908　　US-A1- 2003 039 361**

- **3RD GENERATION PARTNERSHIP PROJECT;
TECHNICAL SPECIFICATION GROUP SERVICES
AND SYSTEM ARCHITECTURES: "Multimedia
Broadcast/Multicast Service (MBMS);
Architecture and functional description (Release
6)"[Online] December 2003 (2003-12), Retrieved
from the Internet: URL:http://www.3gpp.org/ftp/
Specs/archive/ 23_series/23.246/23246-610.zip>
[retrieved on 2007-06-19]**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

**BACKGROUND**

This invention relates generally to accessing content in a networked environment, and in particular to providing secure content to users through multicast services.

Multicast services provide for transmitting messages from a single source to several destinations. A multicast service allows for a set of mobile subscribers to receive multicast traffic on a common channel. In this way, many users can receive the same data without clogging up the air interface with multiple transmissions of the same data.

**SUMMARY**

In accordance with the teachings disclosed herein, a method and an apparatus are provided for accessing multicast content by a user device over a network. For example, a method includes generating a broadcast key on a user device so that multicast content may be sent to the user device.

As another example, a multicast content accessing apparatus is disclosed that includes a data storage mechanism to store user identification key and multicast service activation information. Key generation instructions are configured to generate a broadcast key based upon the stored user identification key and multicast service activation data. The generated broadcast key indicates that multicast content is to be provided to the user device.

**BRIEF DESCRIPTION OF THE DRAWINGS**

FIG. 1 is a block diagram depicting a multicast network system for delivering content to users.
FIG. 2 is a block diagram depicting broadcast key generation for use in accessing content over a multicast network.
FIG. 3 is a structure diagram depicting components used within a multicast system.
FIG. 4 is a flowchart depicting an operational scenario for accessing content within a multicast system.
FIGS. 5 and 6 are flowcharts depicting use of keys within a multicast system.
FIG. 7 is a block diagram depicting an example multicast implementation environment.
FIG. 8 is a block diagram of a wireless mobile communication device.

**DETAILED DESCRIPTION**

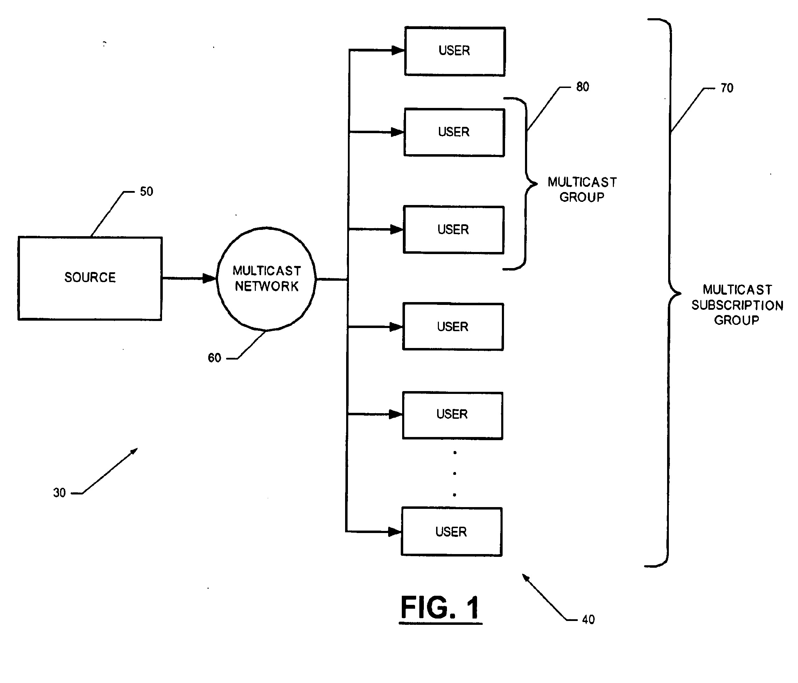

FIG. 1 shows at 30 a multicast system wherein users 40 access content from a source 50 in a secure manner over a multicast network 60. The multicast system 30 allows for the unidirectional point-to-multipoint transmission of content (e.g., messages, text, audio, picture, video) from a single source 50 to several destinations (e.g., users 40). Content in the multicast system 30 is sent once on a common multicast channel, and multiple users 40 can receive the same data without clogging up the air network interface with multiple transmissions of the same data.

If the multicast system 30 is subscription-based, a subscription to a multicast subscription group 70 is required in order for users to access the content from the source 50. An example of a service using a multicast mode could be a football results service or a news reporting service for which a subscription is required. A multicast subscription group 70 includes one or more users who have been subscribed to a multicast mode service and are therefore authorised to activate and receive multicast services associated with the group.

Within that group 70 are users who are part of a multicast group 80. Users in the multicast group 80 are ready to or are receiving any multicast traffic transmitted as part of a multicast mode service. Multicast subscription group members 70 join the multicast group 80 by activating the multicast service. It should be understood that FIG. 1 presents an example of a multicast subscription group and that many different ways exist to establish and operate such groups.

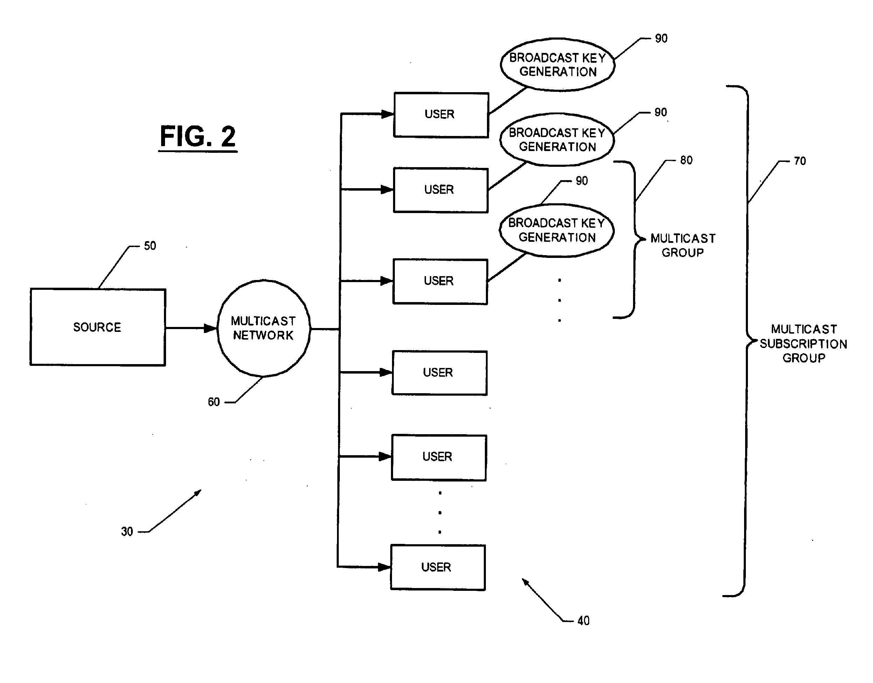

The content from the source 50 is securely transmitted to the users within the multicast group 80. As part of achieving this and as shown at 90 on FIG. 2, a broadcast key is generated by a user. A broadcast key is common to all subscribers of a given service and is used to access a service provider's content.

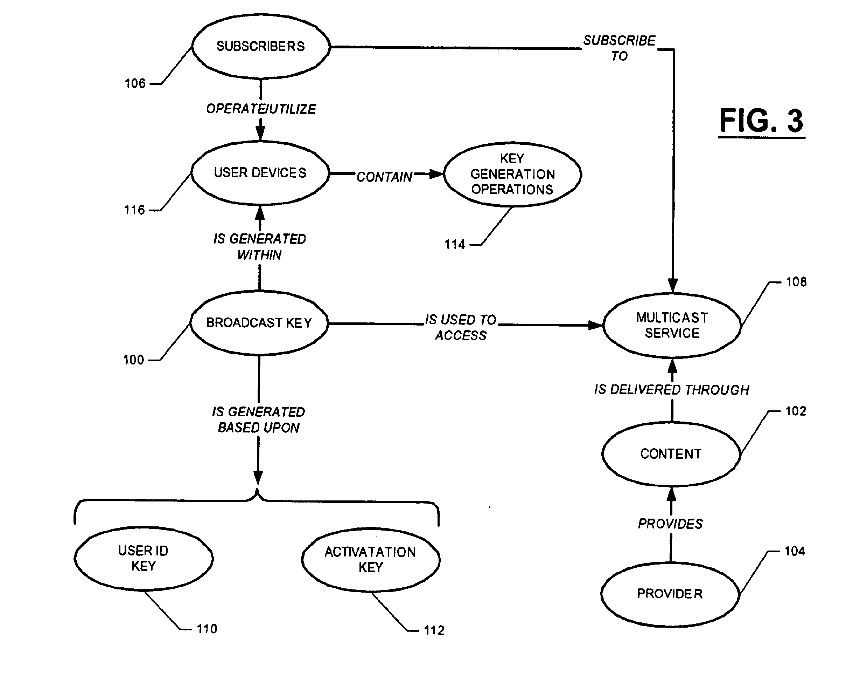

FIG. 3 illustrates generation and use of a broadcast key 100 to access content 102 from a provider 104. Subscribers 106 who have been granted access to the content 102 receive the content 102 through a multicast service 108. The multicast service 108 securely transmits to the subscribers' devices 116 the content 102 through use of the broadcast key 100. A subscriber recipient may access different services of a provider 104 by providing different broadcast keys to the provider 104. As an illustration, a provider 104 may multicast its news service if it receives from a subscriber a broadcast key with a value of "1"; whereas it may multicast sports-related news if it receives a broadcast key with a value of "2".

A broadcast key 100 is generated within a subscriber's device 116. As an example of a device 116 generating a broadcast key 100, a broadcast key 100 may be derived based upon a user identification key 110 and a services activation key 112. The user identification key 110 is an unique key for identifying the user known by the service provider 104 at the initial subscription time. It may be the IMSI (International Mobile Subscriber Identity) key or any other negotiated key between the user and the service provider 104. This key is preferably synchronized at subscription time using a secure connection between the user's device 116 and a provider's remote computer server.

After a contract is established or payment is received from the user, the service provider 104 will send an activation key 112. The activation key 112 is delivered to the subscriber 106 by a direct message. The activation key 112 is preferably different for every subscriber.

After receiving the activation key 112 or when the subscriber 106 wishes to begin receiving content 102, the device 116 generates a broadcast key 100. The device 116 may generate a broadcast key 100, such as by applying a specific operation or function 114 to the user identification key 110 and the activation key 112. The function 114 may be implemented as instructions operable on a device processor and can be expressed as follows:

$$F(\text{user identification key, activation key}) = \text{broadcast key}$$

As an illustration, the function 114 could be an "Exclusive OR" function that is applied to the values of the user identification key 110 and activation key 112.

The function's result can be sent from the device 116 to the provider 104 to designate the desired service. The broadcast key 100 may be generated each time the user wishes to access the provider's content 102. However, it should be understood that other approaches may be used, such as the broadcast key 100 being generated once and used for one or more successive accesses of the provider's content 102.

The generated broadcast key 100 is stored in the user's device 116. The function 114 used to create the broadcast key 100 preferably is known only by the user's device 116 and the service provider 104. The broadcast key 100 generated by the internal function 114 can be changed, such as by providing a different activation (distribution) key 112 to the user's device 116. It should be understood that, in addition to using a user identification key 110 and an activation key 112, a function 114 may use other data for determining the broadcast key 100, such as the device's IMEI (International Mobile Equipment Identity) number.

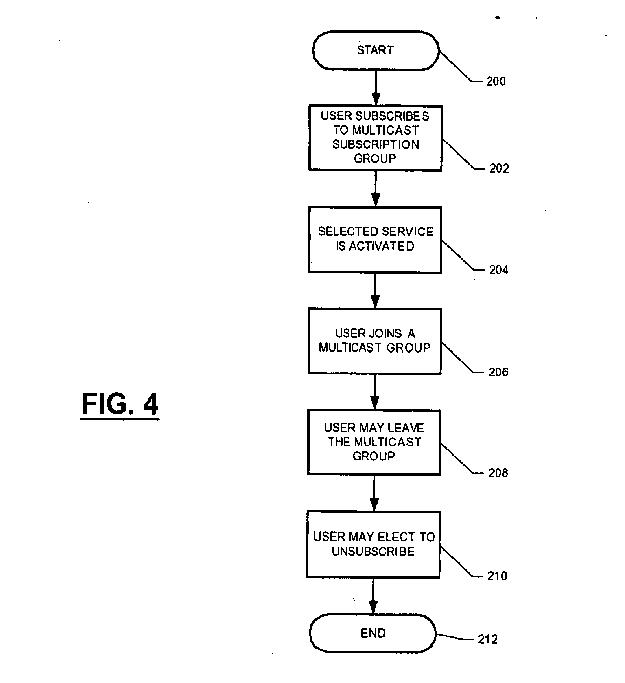

FIG. 4 illustrates an operational scenario for accessing multicast services. Start block 200 indicates that at step 202, a user subscribes or is subscribed to a multicast subscription group and thereby becomes a member of that group. At step 204, a user activates the selected service and thereby joins the multicast group as shown at step 206.

As shown at step 208, a user may decide to leave the multicast group (e.g., selects to stop receiving the content), and may also elect to leave the multicast subscription group by not retaining a subscription as shown at step 210. Processing for this operational scenario ends at end block 212.

It should be understood that similar to the other processing flows described herein, the steps and the order of the steps in the flowchart described herein may be altered, modified and/or augmented and still achieve the desired outcome. For example at step 204, service activation may be performed by a home environment system on behalf of the user. As another example, at steps 208 and 210, the home environment system can act to remove a user from a multicast group and if required remove the user from the multicast subscription group. This allows a provider to bar service if so desired.

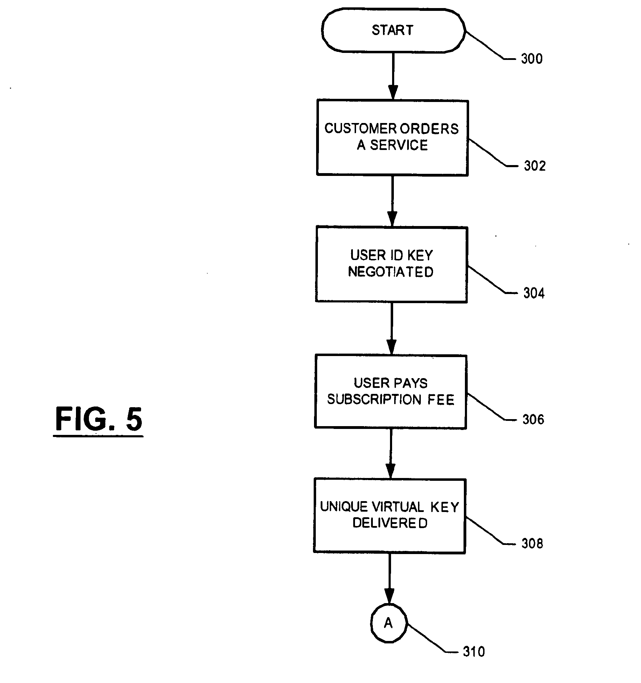

FIG. 5 illustrates another operational scenario involving ordering and delivering multicast services to users. Start block 300 indicates that at step 302, a user orders a service by subscribing to a multicast subscription group. At step 304, the service provider negotiates a user identification key with the customer device or may derive one based upon the user identification and user background information. This could also be a generic number used for all services of one supplier or by many suppliers.

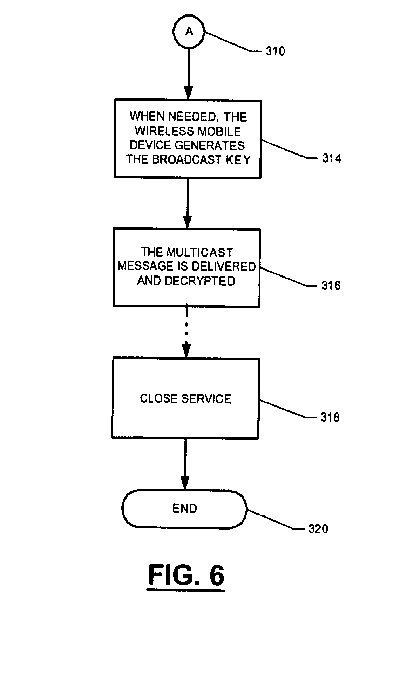

At step 306, the user pays the subscription yearly, monthly, weekly or other periodic fee. A unique virtual activation key is then delivered at step 308 to each user and for each service subscribed. Processing continues on FIG. 6 as indicated by continuation marker 310.

With reference to FIG. 6, the user's device generates at step 314 a broadcast key which is transmitted to a multicast service providing system. The device's generation of the broadcast key in this operational scenario allows for a fast and secure distribution of a key. Generation of the broadcast keys inside the device reduces the risk of the key being copied and deciphered by radio transmission without penalizing the memory or resources of the device.

Based on the generated broadcast key, multicast content is delivered to and decrypted by the user's device at step 316. If at a later date, the service is to be closed (e.g., the subscription is terminated), then the service provider can send at step 318 to the customer a virtual key that indicates to the device to clear/erase the broadcast identification key. Processing for this operational scenario ends at 320.

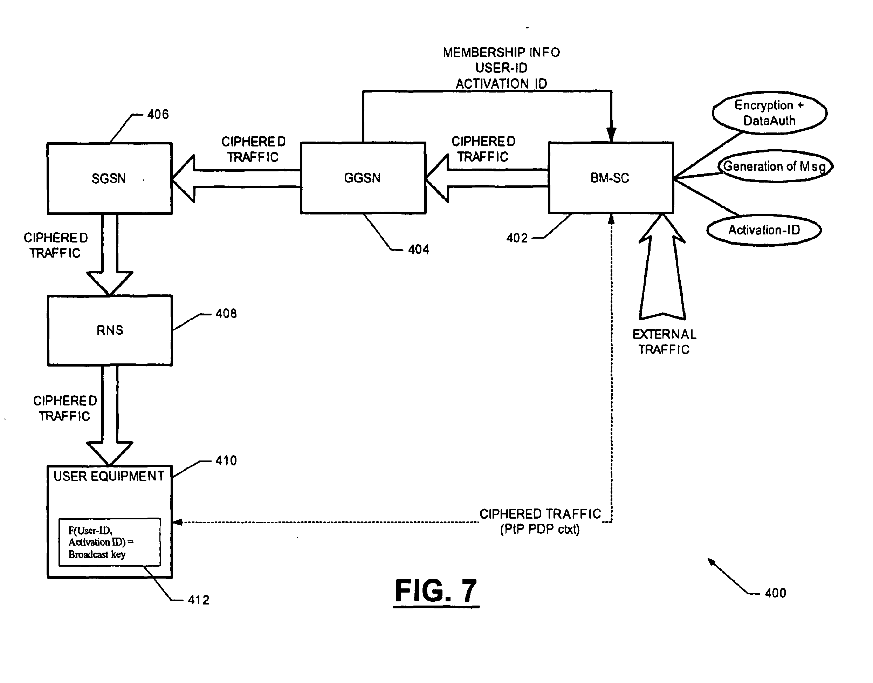

FIG. 7 depicts at 400 a multicast system that can be used to provide unidirectional point-to-multipoint multicast services in a 3G wireless network in which data is transmitted from a single source entity 402 to a group of users (e.g., user equipment 410) in a specific area. A user, who is operating user equipment 410, can gain access to multicast content by using function 412 to generate on the user equipment 410 a broadcast key.

The system 400 in this example is a Multimedia Broadcast/Multicast Service (MBMS) and operates in two modes: broadcast mode and multicast mode. Operating differently than a multicast mode wherein content is transmitted to multiple specific users, the broadcast mode operates to send content out generally to all subscribers. Thus, a broadcast service allows data to be transmitted to all subscribers in a set of cells over a shared broadcast channel.

As shown in FIG. 7, the system 400 includes various components, such as the Broadcast Multicast-Service Centre (BM-SC) 402, GPRS Support Node (GGSN) 404, Serving GPRS Support Node (SGSN) 406, and others. These components are discussed in greater detail in the following documents : (1) 3GPP TS 23.246 V. 6.1.0 (2003-12), Technical Specification, 3rd Generation Partnership Project, Technical Specification Group Services and System Aspects, Multimedia Broadcast/Multicast Service (MBMS), Architecture and functional description (Release 6) (available from 3GPP support office address 650 Route des Lucioles - Sophia Antipolis, Valbonne - FRANCE); and (2) 3GPP TS 22.146 V6.2.0 (2003-03) Technical Specification, 3rd Generation Partnership Project, Technical Specification Group Services and System Aspects, Multimedia Broadcast/Multicast Service, Stage 1 (Release 6) (available from 3GPP support office address 650 Route des Lucioles - Sophia Antipolis, Valbonne - FRANCE).

In the example of FIG. 7, the BM-SC 402 is a source for MBMS data. Furthermore because the system 400 may be used to transport several different types of protocols/codecs (e.g., a media streaming application, a file download, etc.), different protection methods may be used as part of the transport of the content.

With respect to operating in the multicast mode, a multicast service may be configured in the system 400 to securely transmit data to a given set of users, such as via ciphered traffic. In order to achieve this, the BM-SC 402 performs authentication, key distribution and data protection for the multicast service content and messages.

The point-to-point services in a 3G network may use the 3GPP AKA protocol (discussed in the following reference: TS 33.102 located at the 3GPP organization's web site) to both authenticate a user and agree on keys to be used between that user and the network. These keys are subsequently used to provide integrity protection of signalling traffic and optional confidentiality protection of both signalling and user data between the radio network controller (RNC) operating in the radio network subsystem (RNS) 408 and the user equipment 410. The user and the network could mutually authenticate each other using the AKA protocol.

Preferably, the keys that are used to protect the transmitted data in the system 400 should be regularly changed to ensure that they are fresh. This allows greater protection in a multicast type service, such as to address new users joining the service (e.g., to prevent them from being able to decrypt data sent before they joined the service) or a user leaving the service (e.g., to prevent them from being able to decrypt traffic sent after they left the service). The multicast data may be encrypted with a common encryption key, which is available to all users that have joined the MBMS service.

It will be appreciated that the systems and methods are disclosed herein by way of example only. For example, data structures and device storage mechanisms may be used to store data needed to generate a broadcast key on a device or to store the generated broadcast key. Still further, data signals transmitted using a communication channel may be used with the systems and methods. The data signals can include any type of data, such as the keys provided to the device or a broadcast key sent from the device. The data signal may be packetized data that is transmitted through a carrier wave or other medium across a wireless network. Computer-readable media may be provided to and used with the mobile device that is capable of causing a mobile device to perform the methods and implement the systems disclosed herein.

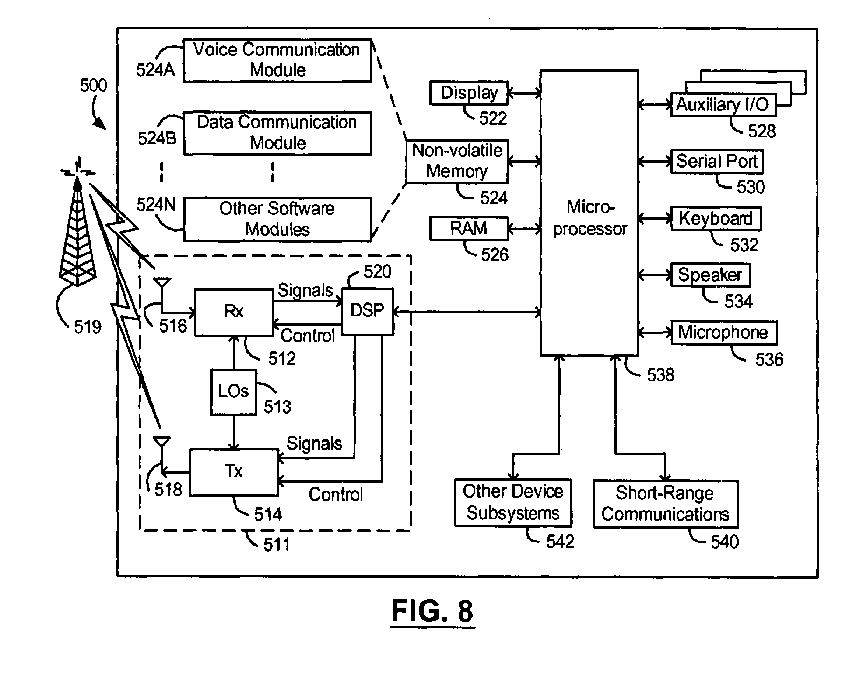

As another example, the methods and systems may be used with a wide assortment of electronic devices, such as the mobile device 500 shown in FIG 8. The mobile device 500 is preferably a two-way communication device having at least voice and data communication capabilities. The mobile device 500 preferably has the capability to communicate with other computer systems on the Internet. Depending on the functionality provided by the mobile device 500, it may be referred to as a data messaging device, a two-way pager, a mobile telephone with data messaging capabilities, a wireless Internet appliance, or a data communication device (with or without telephony capabilities), but is referred to herein primarily as a mobile device.

The mobile device 500 includes a transceiver 511, a microprocessor 538, a display 522, non-volatile memory 524, random access memory (RAM) 526, auxiliary input/output (I/O) devices 528, a serial port 530, a keyboard 532, a speaker 534, a microphone 536, a short-range wireless communications sub-system 540, and other device sub-systems 542. The transceiver 511 preferably includes transmit and receive antennas 516, 518, a receiver (Rx) 512, a transmitter (Tx) 514, one or more local oscillators (LOs) 513, and a digital signal processor (DSP) 520. Within the non-volatile memory 524, the mobile device 500 includes a plurality of software modules 524A-524N that can be executed by the microprocessor 538 (and/or the DSP 520), including a voice communication module 524A, a data communication module 524B, and a plurality of other operational modules 524N for carrying out a plurality of other functions.

The mobile device 500 is preferably a two-way communication device having voice and data communication capabilities. Thus, for example, the mobile device 500 may communicate over a voice network, such as any of the analog or digital cellular networks, and may also communicate over a data network. The voice and data networks are depicted in FIG. 8 by the communication tower 519. These voice and data networks may be separate communication networks using separate infrastructure, such as base stations, network controllers, etc., or they may be integrated into a single wireless network. References to the network 519 should therefore be interpreted as encompassing both a single voice and data network and separate networks.

The communication subsystem 511 is used to communicate with the network 519. The DSP 520 is used to send and receive communication signals to and from the transmitter 514 and receiver 512, and also exchange control information with the transmitter 514 and receiver 512. If the voice and data communications occur at a single frequency, or closely-spaced set of frequencies, then a single LO 513 may be used in conjunction with the transmitter 514 and receiver 512. Alternatively, if different frequencies are utilized for voice communications versus data communications or the mobile device 500 is enabled for communications on more than one network 519, then a plurality of LOs 513 can be used to generate frequencies corresponding to those used in the network 519. Although two antennas 516, 518 are depicted in FIG. 8, the mobile device 500 could be used with a single antenna structure. Information, which includes both voice and data information, is communicated to and from the communication module 511 via a link between the DSP 520 and the microprocessor 538.

The detailed design of the communication subsystem 511, such as frequency band, component selection, power level, etc., is dependent upon the communication network 519 in which the mobile device 500 is intended to operate. For example, a mobile device 500 intended to operate in a North American market may include a communication subsystem 511 designed to operate with the Mobitex or DataTAC mobile data communication networks and also designed to operate with any of a variety of voice communication networks, such as AMPS, TDMA, CDMA, PCS, etc., whereas a mobile device 500 intended for use in Europe may be configured to operate with the GPRS data communication network and the GSM voice communication network. Other types of data and voice networks, both separate and integrated, may also be utilized with the mobile device 500.

Communication network access requirements for the mobile device 500 also vary depending upon the type of network 519. For example, in the Mobitex and DataTAC data networks, mobile devices are registered on the network using a unique identification number associated with each device. In GPRS data networks, however, network access is associated with a subscriber or user of the mobile device 500. A GPRS device typically requires a subscriber identity module ("SIM"), which is required in order to operate the mobile device 500 on a GPRS network. Local or non-network communication functions (if any) may be operable, without the SIM, but the mobile device 500 is unable to carry out functions involving communications over the network 519, other than any legally required operations, such as '911' emergency calling.

After any required network registration or activation procedures have been completed, the mobile device 500 is able to send and receive communication signals, preferably including both voice and data signals, over the network 519. Signals received by the antenna 516 from the communication network 519 are routed to the receiver 512, which provides for signal amplification, frequency down conversion, filtering, channel selection, etc., and analog to digital conversion. Analog to digital conversion of the received signal allows more complex communication functions, such as digital demodulation and decoding, to be performed using the DSP 520. In a similar manner, signals to be transmitted to the network 519 are processed, including modulation and encoding, for example, by the DSP 520 and are then provided to the transmitter 514 for digital to analog conversion, frequency up conversion, filtering, amplification and transmission to the communication network 519 via the antenna 518. Although a single transceiver 511 is shown for both voice and data communications, in alternative embodiments, the mobile device 500 may include multiple distinct transceivers, such as a first transceiver for transmitting and receiving voice signals, and a second transceiver for transmitting and receiving data signals, or a first transceiver configured to operate within a first frequency band, and a second transceiver configured to operate within a second frequency band.

In addition to processing the communication signals, the DSP 520 also provides for receiver and transmitter control. For example, the gain levels applied to communication signals in the receiver 512 and transmitter 514 may be adaptively controlled through automatic gain control algorithms implemented in the DSP 520. Other transceiver control algorithms could also be implemented in the DSP 520 in order to provide more sophisticated control of the transceiver 511.

The microprocessor 538 preferably manages and controls the overall operation of the mobile device 500. Many types of microprocessors or microcontrollers could be used here, or, alternatively, a single DSP 520 could be used to carry out the functions of the microprocessor 538. Low-level communication functions, including at least data and voice communications, are performed through the DSP 520 in the transceiver 511. High-level communication applications, including the voice communication application 524A, and the data communication application 524B are stored in the non-volatile memory 524 for execution by the microprocessor 538. For example, the voice communication module 524A provides a high-level user interface operable to transmit and receive voice calls between the mobile device 500 and a plurality of other voice devices via the network 519. Similarly, the data communication module 524B provides a high-level user interface operable for sending and receiving data, such as e-mail messages, files, organizer information, short text messages, etc., between the mobile device 500 and a plurality of other data devices via the network 519.

The microprocessor 538 also interacts with other device subsystems, such as the display 522, the RAM 526, the auxiliary I/O devices 528, the serial port 530, the keyboard 532, the speaker 534, the microphone 536, the short-range communications subsystem 540, and any other device subsystems generally designated as 542. For example, the modules 524A-N are executed by the microprocessor 538 and may provide a high-level interface between a user of the mobile device and the mobile device. This interface typically includes a graphical component provided through the display 522, and an input/output component provided through the auxiliary I/O devices 528, keyboard 532, speaker 534, or microphone 536.

Some of the subsystems shown in FIG. 8 perform communication-related functions, whereas other subsystems may provide "resident" or on-device functions. Notably, some subsystems, such as keyboard 532 and display 522 may be used for both communication-related functions, such as entering a text message for transmission over a data communication network, and device-resident functions such as a calculator or task list or other PDA type functions.

Operating system software used by the microprocessor 538 is preferably stored in a persistent store such as the non-volatile memory 524. In addition to the operating system and communication modules 524A-N, the non-volatile memory 524 may include a file system for storing data. The non-volatile memory 524 also includes at least an authentication information store for storing authentication information. The operating system, specific device applications or modules, or parts thereof, are typically temporarily loaded into a volatile store, such as the RAM 526 for faster operation. Moreover, received communication signals may also be temporarily stored to RAM 526, before permanently writing them to a file system located in the non-volatile memory 524. The non-volatile memory 524 may be implemented, for example, with Flash memory, non-volatile RAM, or battery backed-up RAM.

An exemplary application module 524N that may be loaded onto the mobile device 500 is a PIM application providing PDA functionality, such as calendar events, appointments, and task items. This module 524N may also interact with the voice communication module 524A for managing phone calls, voice mails, etc., and may also interact with the data communication module 524B for managing e-mail communications and other data transmissions. Alternatively, all of the functionality of the voice communication module 524A and the data communication module 524B may be integrated into the PIM module.

The non-volatile memory 524 preferably provides a file system to facilitate storage of PIM data items on the device. The PIM application preferably includes the ability to send and receive data items, either by itself, or in conjunction with the voice and data communication modules 524A, 524B, via the wireless network 519. The PIM data items are preferably seamlessly integrated, synchronized and updated, via the wireless network 519, with a corresponding set of data items stored or associated with a host computer system, thereby creating a mirrored system for data items associated with a particular user.

The mobile device 500 is manually synchronized with a host system by placing the mobile device 500 in an interface cradle, which couples the serial port 530 of the mobile device 500 to a serial port of the host system. The serial port 530 may also be used to download other application modules 524N for installation on the mobile device 500. This wired download path may further be used to load encryption keys onto the mobile device 500 for use in secure communications, which is a more secure method than exchanging encryption information via the wireless network 519.

Software application modules 524N may be loaded onto the mobile device 500 through the network 519, through an auxiliary I/O subsystem 528, through the short-range communications subsystem 540, or through any other suitable subsystem 542, and installed by a user in the non-volatile memory 524 or RAM 526. Such flexibility in application installation increases the functionality of the mobile device 500 and may provide enhanced on-device functions, communication-related functions, or both. For example, secure communication applications may enable electronic commerce functions and other such financial transactions to be performed using the mobile device 500. Such software applications as a browser or a messaging application in the non-volatile memory 524 support remote access to a computer network using distributed authentication information and two-factor authentication at the computer network. The code generation software module or utility could be incorporated into, or at least accessible from, each remote access software application to provide for the access code insertion or copy and paste features described above.

When the mobile device 500 is operating in a data communication mode, a received signal, such as a text message or a web page download, is processed by the transceiver 511 and provided to the microprocessor 538, which preferably further processes the received signal for output to the display 522, or, alternatively, to an auxiliary I/O device 528. When data protection is enabled, received data may be encrypted as described above before being stored on the mobile device 500. A user of mobile device 500 may also compose data items, such as email messages, using the keyboard 532, which is preferably a complete alphanumeric keyboard laid out in the QWERTY style, although other styles of complete alphanumeric keyboards such as the known DVORAK style may also be used. User input to the mobile device 500 is further enhanced with the plurality of auxiliary I/O devices 528, which may include a thumbwheel input device, a touchpad, a variety of switches, a rocker input switch, etc. The composed data items input by the user are then transmitted over the communication network 519 via the transceiver 511, and may also be stored in encrypted form on the mobile device 500.

When the mobile device 500 is operating in a voice communication mode, the overall operation of the mobile device 500 is substantially similar to the data mode, except that received signals are output to the speaker 534 and voice signals for transmission are generated by a microphone 536. Alternative voice or audio I/O devices, such as a voice message recording subsystem, may also be implemented on the mobile device 500. The display 522 may also be used to provide an indication of the identity of a calling party, the duration of a voice call, or other voice call related information. For example, the microprocessor 538, in conjunction with the voice communication module 524A and the operating system software, may detect the caller identification information of an incoming voice call and display it on the display 522.

A short-range communications subsystem 540 is also included in the mobile device 500. For example, the subsystem 540 may include an infrared device and associated circuits and components, or a Bluetooth or 802.11 short-range wireless communication module to provide for communication with similarly-enabled systems and devices. Moreover, the device of FIG. 8 may include fewer, further, or different components than those shown in the drawing.

**Claims**

1. A multicast content accessing method for use on a user device (116), wherein a multicast service provides the multicast content, comprising:

   receiving multicast service activation data over a network (60);
   generating on the user device (116) a broadcast key;
   sending from the user device (116) the generated broadcast key (100) over the network (60);

   wherein the generated broadcast key (100) indicates that multicast content is to be provided to the user device (116);
   wherein the user device (116) accesses one or more different multicast services of a provider by providing different broadcast keys (100) to the provider for each service;
   wherein the different broadcast keys are generated on the user device (100);
   wherein the multicast service activation data is different for each user of the multicast service;
   wherein the broadcast key (100) is generated on the user device (116) by applying a function to a user identification key (110) and the received multicast service activation data;
   wherein the same broadcast key (100) value is generated by user devices (116) having different multicast service activation data.

2. The method of claim 1, wherein the multicast content is transmitted to the user device (116) via a unidirectional point-to-multipoint transmission.

3. The method of claim 2, wherein the unidirectional point-to-multipoint transmission occurs over a 3G wireless network.

4. The method of claim 2, wherein the unidirectional point-to-multipoint transmission occurs within a Multimedia Broadcast/Multicast Service MBMS system.

5. The method according to one of the claims 1 to 4, wherein the multicast content includes messages, text, audio, pictures, or video from a single source.

6. The method according to one of the claims 1 to 5, wherein a subscription to the multicast service allows the user device (116) to receive the multicast content.

7. The method of claim 6, wherein other user devices (116) subscribe to the multicast service, thereby forming a multicast subscription group (80);
   wherein a subset of user devices (116) from the multicast subscription group (80) are receiving the multicast content.

8. The method of claim 7, wherein the broadcast key (100) is common to all subscribers of a given multicast service and is used to access the multicast content.

9. The method according to one of the claims 1 to 8, wherein a virtual key is provided to the user device (116) that indicates to the user device (116) to clear the broadcast key (100) used to access the multicast service.

10. The method according to one of the claims 1 to 9, wherein the received multicast service activation data activates for the user device (116) the multicast service that provides the multicast content.

11. The method of claim 10, wherein the user identification key is provided to the user device (116) when a user of the user device (116) subscribes to the multicast service.

12. The method of claim 10, wherein the multicast service activation data is an activation key that is provided when a contract or payment is received from a user of the user device (116).

13. The method according to one of the claims 1 to 12, wherein a user device's (116) broadcast key generation function is known to the user device but is not known to other user devices (116).

14. The method according to one of the claims 1 to 13, wherein the broadcast key (100) generated by the function can be changed by providing a different activation key to the user device (116).

15. The method according to one of the claims 1 to 14, wherein the user device (116) is a handheld wireless mobile communications device.

16. A multicast content accessing apparatus for use on a user device (116),
wherein a multicast service provides the multicast content, comprising:

a data storage mechanism that stores user identification key (110) and multicast service activation data;
key generation operation instructions configured to generate on the user device (116) a broadcast key (100) based upon the stored user identification key (110) and the multicast service activation data;

wherein the generated broadcast key (100) indicates that multicast content is to be provided to the user device (116);
wherein the user device (116) accesses one or more different multicast services of a provider (104) by providing different broadcast keys (100) to the provider (104) for each service;
wherein the different broadcast keys (100) are generated on the user device (116);
wherein the multicast service activation data is different for each user of the multicast service;
wherein the broadcast key (100) is generated on the user device (116) by applying a function to a user identification key (110) and the received multicast service activation data;
wherein the same broadcast key (100) value is generated by user devices (116) having different multicast service activation data.

**Patentansprüche**

1. Multicast-Inhalt-Zugriffs-Verfahren zur Verwendung auf einer Benutzervorrichtung (116), wobei ein Multicast-Dienst den Multicast-Inhalt liefert, das aufweist:

Empfangen von Multicast-Dienst-Aktivierungsdaten über ein Netzwerk (60); Erzeugen eines Broadcast-Schlüssels auf der Benutzervorrichtung (116);
Senden des erzeugten Broadcast-Schlüssels (100) von der Benutzervorrichtung (116) über das Netzwerk (60);

wobei der erzeugte Broadcast-Schlüssel (100) anzeigt, dass Multicast-Inhalt an die Benutzervorrichtung (116) zu liefern ist;
wobei die Benutzervorrichtung (116) auf einen oder mehrere verschiedene Multicast-Dienste eines Anbieters zugreift durch Liefern unterschiedlicher Broadcast-Schlüssel (100) an den Anbieter für jeden Dienst;
wobei die unterschiedlichen Broadcast-Schlüssel auf der Benutzervorrichtung (116) erzeugt werden;
wobei die Multicast-Aktivierungsdaten für jeden Benutzer des Multicast-Dienstes unterschiedlich sind;
wobei der Broadcast-Schlüssel (100) auf der Benutzervorrichtung (116) erzeugt wird durch Anwenden einer Funktion auf einen Benutzeridentifikationsschlüssel (l10) und die empfangenen Multicast-Dienst-Aktivierungsdaten;
wobei derselbe Broadcast-Schlüssel (100)-Wert durch Benutzervorrichtungen (116) mit unterschiedlichen Multicast-Dienst-Aktivierungsdaten erzeugt wird.

2. Verfahren gemäß Anspruch 1, wobei der Multicast-Inhalt an die Benutzervorrichtung (116) über eine unidirektionale Punkt-zu-Mehrpunkt-Übertragung übertragen wird.

3. Verfahren gemäß anspruch 2, wobei die unidirektionale Punkt-zu-Mehrpunkt-Übertragung über ein drahtloses 3G-Netzwerk stattfindet.

4. Verfahren gemäß Anspruch 2, wobei die unidirektionale Punkt-zu-Mehrpunkt-Übertragung in einem Multimedia-Broadcast/Multicast-Dienst(MBMS - Multimedia Broadcast/Multicast Service)-System stattfindet.

5. Verfahren gemäß einem der Ansprüche 1 bis 4, wobei der Multicast-Inhalt Nachrichten, Text, Audio, Bilder oder Video von einer einzelnen Quelle umfasst.

6. Verfahren gemäß einem der Ansprüche 1 bis 5, wobei eine Subskription an dem Mutticast-Dienst der Benutzervorrichtung (116) ermöglicht, den Multicast-Inhalt zu empfangen.

7. Verfahren gemäß Anspruch 6, wobei andere Benutzervorrichtungen (116) den Multicast-Dienst subskribieren, wodurch sie eine Multicast-Subskriptions-Gruppe (80) bilden;
wobei ein Teilsatz von Benutzervorrichtungen (116) der Multicast-Subskriptions-Gruppe (80) den Multicast-Inhalt empfangen.

8. Verfahren gemäß Anspruch 7, wobei der Broadcast-Schlüssel (100) für alle Teilnehmer eines gegebenen Multicast-Diensts gemeinsam ist und verwendet wird, um auf den Multicast-Inhalt zuzugreifen.

9. Verfahren gemäß einem der Ansprüche 1 bis 8, ein virtueller Schlüssel an die Benutzervorrichtung (116) geliefert wird, die der Benutzervorrichtung (116) anzeigt, den Broadcast-Schlüssel (100) zu löschen, der zum Zugriff auf den Multicast-Dienst verwendet wird.

10. Verfahren gemäß einem der Ansprüche 1 bis 9, wobei die empfangenen Multicast-Dienst-Aktivierungsdaten für die Benutzervorrichtung (116) den Multicast-Dienst aktivieren, der den Multicast-Inhalt liefert.

11. Verfahren gemäß Anspruch 10, wobei der Benutzeridentifikationsschlüssel an die Benutzervorrichtung (116) geliefert wird, ein Benutzer der Benutzervorrichtung (116) den Multicast-Dienst subskribiert.

12. Verfahren gemäß Anspruch 10, wobei die Multicast-Dienst-Aktivierungsdaten ein Aktivierungsschlüssel sind, der geliefert wird, wenn ein Vertrag oder eine Bezahlung von einem Benutzer der Benutzervorrichtung (116) empfangen wird.

13. Verfahren gemäß einem der Ansprüche 1 bis 12, wobei eine Broadcast-schlüssel-Erzeugungsfunktion der Benutzervorrichtung (116) für die Benutzervorrichtung bekannt ist, aber für andere Benutzervorrichtungen (116) unbekannt ist.

14. Verfahren gemäß einem der Ansprüche 1 bis 13, der Broadcast-Schlüssel (100), der durch die Funktion erzeugt wird, durch Liefern eines anderen Aktivierungsschlüssels an die Benutzervorrichtung (116) verändert werden kann.

15. Verfahren gemäß einem der Ansprüche 1 bis 14, wobei die Benutzervorrichtung (116) eine handgehaltene bzw. tragbare drahtlose mobile Kommunikationsvorrichtung ist.

16. Multicast-Inhalt-Zugriffsvorrichtung zur Verwendung auf einer Benutzervorrichtung (116), wobei ein Multicast-Dienst den Multicast-Inhalt liefert, wobei die Vorrichtung aufweist:

    einen Datenspeichermechanismus, der einen Benutzeridentifikationsschlüssel (110) und Multicast-Dienst-Aktivierungsdaten speichert;
    Schlüsselerzeugungsoperationsanweisungen, die konfiguriert sind, auf der Benutzervorrichtung (116) einen Broadcast-Schlüssel (100) zu erzeugen, basierend auf dem gespeicherten Benutzeridentifikationsschlüssel (110) und den Multicast-Dienst-Aktivierungsdaten;

    wobei der erzeugte Broadcast-Schlüssel (100) anzeigt, dass Multicast-Inhalt an die Benutzervorrichtung (116) zu liefern ist;
    wobei die Benutzervorrichtung (116) auf einen oder mehrere verschiedene Multicast-Dienste eines Anbieters (104) zugreift durch Liefern unterschiedlicher Broadcast-Schlüssel (100) an den Anbieter (104) für jeden Dienst;
    wobei die unterschiedlichen Broadcast-Schlüssel (100) auf der Benutzervorrichtung (116) erzeugt werden;

wobei die Multicast-Aktivierungsdaten für jeden Benutzer des Multicast-Dienstes unterschiedlich sind;
wobei der Broadcast-Schlüssel (100) auf der Benutzervorrichtung (116) erzeugt wird durch Anwenden einer Funktion auf einen Benutzeridentifikationsschlüssel (110) und die empfangenen Multicast-Dienst-Aktivierungsdaten;
wobei derselbe Broadcast-Schlüssel(100)-Wert durch Benutzervorrichtungen (116) mit unterschiedlichen Multicast-Dienst-Aktivierungsdaten erzeugt wird.

**Revendications**

1. Procédé d'accès à un contenu de multidiffusion destiné à être utilisé sur un dispositif utilisateur (116), dans lequel un service de multidiffusion fournit un contenu de multidiffusion, comprenant :

   la réception de données d'activation du service de multidiffusion par l'intermédiaire d'un réseau (60) ;
   la génération, sur le dispositif utilisateur (116), d'une clé de diffusion ;
   l'envoi depuis le dispositif utilisateur (116) de la clé de diffusion générée (100) par l'intermédiaire du réseau (60) ;

   dans lequel la clé de diffusion générée (100) indique que le contenu de multidiffusion doit être fourni au dispositif utilisateur (116) ;
   dans lequel le dispositif utilisateur (116) accède à un ou plusieurs services de multidiffusion différents d'un fournisseur en fournissant au fournisseur des clés de diffusion (100) différentes pour chaque service;
   dans lequel les différentes clés de diffusion sont générées sur le dispositif utilisateur (100);
   dans lequel les données d'activation du service de multidiffusion sont différentes pour chaque utilisateur du service de multidiffusion ;
   dans lequel la clé de diffusion (100) est générée sur le dispositif utilisateur (116) par application d'une fonction à une clé d'identification d'utilisateur (110) et des données d'activation de service de multidiffusion reçues ;
   dans lequel la même valeur de la clé de diffusion (100) est générée par des dispositifs utilisateurs (116) ayant des données d'activation de service de multidiffusion différentes.

2. Procédé selon la revendication 1, dans lequel le contenu de multidiffusion est transmis au dispositif utilisateur (116) par l'intermédiaire d'une transmission point à multipoint unidirectionnelle.

3. Procédé selon la revendication 2, dans lequel la transmission point à multipoint unidirectionnelle se produit par l'intermédiaire d'un réseau sans fil 3G.

4. Procédé selon la revendication 2, dans lequel la transmission point à multipoint unidirectionnelle se produit au sein d'un système de service de diffusion/multidiffusion multimédia MBMS.

5. Procédé selon l'une des revendications 1 à 4, dans lequel le, contenu de multidiffusion comprend des messages, du texte, de l'audio, des images ou de la vidéo provenant d'une même source.

6. Procédé selon l'une des revendications 1 à 5, dans lequel un abonnement au service de multidiffusion permet au dispositif utilisateur (116) de recevoir le contenu de multidiffusion.

7. Procédé selon la revendication 6, dans lequel d'autres dispositifs utilisateurs (116) s'abonnent au service de multidiffusion, formant ainsi un groupe d'abonnement à la multidiffusion (80) ;
   dans lequel un sous-ensemble de dispositifs utilisateurs (116) appartenant au groupe d'abonnement à la multidiffusion (80) reçoivent le contenu de multidiffusion.

8. Procédé selon la revendication 7, dans lequel la clé de diffusion (100) est commune à tous les abonnés d'un service de multidiffusion donné et est utilisée pour accéder au contenu de multidiffusion.

9. Procédé selon l'une des revendications 1 à 8, dans lequel une clé virtuelle est fournie au dispositif utilisateur (116), celle-ci indiquant su dispositif utilisateur (116) d'effacer la clé de diffusion (100) utilisée pour accéder au service de multidiffusion.

10. Procédé selon l'une des revendications 1 à 9, dans lequel les données d'activation de service de multidiffusion reçues activent pour le dispositif utilisateur (116) le service de multidiffusion qui fournit le contenu de multidiffusion.

**11.** Procédé selon la revendication 10, dans lequel la clé d'identification d'utilisateur est fournie au dispositif utilisateur (116) lorsqu'un utilisateur du dispositif utilisateur (116) s'abonne au service de multidiffusion.

**12.** Procédé selon la revendication 10, dans lequel les données d'activation du service de multidiffusion sont une clé d'activation qui est fournie lorsqu'un contrat ou lorsqu'un paiement est reçu d'un utilisateur du dispositif utilisateur (116).

**13.** Procédé selon l'une des revendications 1 à 12, dans lequel une fonction de génération de clé de diffusion d'un dispositif utilisateur (116) est connue du dispositif utilisateur mais n'est pas connue d'autres dispositifs utilisateurs (116).

**14.** Procédé selon l'une des revendications 1 à 13, dans lequel la clé de diffusion (100) générée par la fonction peut être modifiée par fourniture d'une clé d'activation différente au dispositif utilisateur (116).

**15.** Procédé selon l'une des revendications 1 à 14, dans lequel le dispositif utilisateur (116) est un dispositif de communication mobile sans fil portable.

**16.** Appareil d'accès à un contenu de multidiffusion destiné à être utilisé sur un dispositif utilisateur (116), dans lequel un service de multidiffusion fournit le contenu de multidiffusion, comprenant :

un mécanisme de stockage de données qui stocke une clé d'identification d'utilisateur (110) et des données d'activation de service de multidiffusion ;
les instructions d'une opération de génération de de configurées pour générer, sur le dispositif utilisateur (116), une clé de diffusion (100) ayant pour base la clé d'identification d'utilisateur stockée (110) et les données d'activation de service de multidiffusion ;

dans lequel la clé de diffusion générée (100) indique que le contenu de multidiffusion doit être fourni au dispositif utilisateur (116):
dans lequel le dispositif utilisateur (116) accède à un ou plusieurs services de multidiffusion différents d'un fournisseur (104) par fourniture au fournisseur (104) de clés de diffusion différentes (100) pour chaque service ;
dans lequel les différentes clés de diffusion (100) sont générées sur le dispositif utilisateur (116):
dans lequel les données d'activation de service de multidiffusion sont différentes pour chaque utilisateur du service de multidiffusion;
dans lequel la clé de diffusion (100) est générée sur le dispositif utilisateur (116) par application d'une fonction à une clé d'identification d'utilisateur (110) et aux données d'activation de service de multidiffusion reçues;
dans lequel la même valeur de la clé de diffusion (100) est générée par des dispositifs utilisateurs (116) ayant des données d'activation de service de multidiffusion différentes.

**FIG. 1**

## FIG. 2

**FIG. 3**

EP 1 562 322 B1

EP 1 562 322 B1

**FIG. 4**

```
        ┌─────────────┐
        │    START    │────── 200
        └─────────────┘
               │
               ▼
      ┌─────────────────┐
      │ USER SUBSCRIBES │
      │  TO MULTICAST   │
      │  SUBSCRIPTION   │────── 202
      │     GROUP       │
      └─────────────────┘
               │
               ▼
      ┌─────────────────┐
      │ SELECTED SERVICE│
      │  IS ACTIVATED   │────── 204
      └─────────────────┘
               │
               ▼
      ┌─────────────────┐
      │  USER JOINS A   │
      │ MULTICAST GROUP │────── 206
      └─────────────────┘
               │
               ▼
      ┌─────────────────┐
      │  USER MAY LEAVE │
      │  THE MULTICAST  │
      │     GROUP       │────── 208
      └─────────────────┘
               │
               ▼
      ┌─────────────────┐
      │ USER MAY ELECT  │
      │  TO UNSUBSCRIBE │────── 210
      └─────────────────┘
               │
               ▼
        ┌─────────────┐
        │     END     │────── 212
        └─────────────┘
```

EP 1 562 322 B1

## FIG. 5

```
        ┌─────────────┐
        │    START    │——— 300
        └─────────────┘
               │
               ▼
      ┌──────────────────┐
      │ CUSTOMER ORDERS  │
      │    A SERVICE     │——— 302
      └──────────────────┘
               │
               ▼
      ┌──────────────────┐
      │   USER ID KEY    │
      │    NEGOTIATED    │——— 304
      └──────────────────┘
               │
               ▼
      ┌──────────────────┐
      │    USER PAYS     │
      │ SUBSCRIPTION FEE │——— 306
      └──────────────────┘
               │
               ▼
      ┌──────────────────┐
      │ UNIQUE VIRTUAL KEY│
      │    DELIVERED     │——— 308
      └──────────────────┘
               │
               ▼
             ( A )——— 310
```

```
        ( A )──── 310
          │
          ▼
┌──────────────────┐
│   WHEN NEEDED, THE │
│   WIRELESS MOBILE  │
│ DEVICE GENERATES   │──── 314
│  THE BROADCAST KEY │
└──────────────────┘
          │
          ▼
┌──────────────────┐
│   THE MULTICAST    │
│MESSAGE IS DELIVERED│──── 316
│   AND DECRYPTED    │
└──────────────────┘
          ┊
          ▼
┌──────────────────┐
│                    │
│   CLOSE SERVICE    │──── 318
│                    │
└──────────────────┘
          │
          ▼
      ╭──────────╮
      │   END    │──── 320
      ╰──────────╯
```

## FIG. 6

FIG. 7

EP 1 562 322 B1

FIG. 8